# EUROPÄISCHE PATENTANMELDUNG

(11) **EP 1 163 976 A1**
(43) Veröffentlichungstag der Anmeldung: **19.12.2001**
(21) Anmeldenummer: 00112828.9
(22) Anmeldetag: 17.06.2000
(51) Int. Cl.: B23Q 5/14, B23P 23/02

(54) **Drehantrieb mit einer Drehzahlumschalteinrichtung für eine Werkzeughaltevorrichtung**

(71) Anmelder: Maschinenfabrik Berthold Hermle Aktiengesellschaft, D-78559 Gosheim (DE)
(72) Erfinder: Bernhard, Franz-Xaver, 78549 Spaichingen (DE)
(74) Vertreter: Vetter, Hans, Dipl.-Phys. Dr.

(57) **Zusammenfassung**

Es wird ein Drehantrieb mit einer Drehzahlumschalteinrichtung für eine Werkzeughaltevorrichtung (17) vorgeschlagen, wobei eine die Werkzeughaltevorrichtung (17) tragende Abtriebswelle (10) mittels eines Stellantriebs (29) in zwei verschiedene Axialpositionen bewegbar ist. Die Abtriebswelle (10) ist in der ersten Axialposition mit einem motorisch angetriebenen ersten Antriebszahnrad (14) und in der zweiten Axialposition mit einer konzentrischen Hohlwelle (23) gekoppelt, die durch ein motorisch angetriebenes zweites Antriebszahnrad (15) über ein Schneckengetriebe (32) angetrieben ist.

## Beschreibung

Die Erfindung betrifft einen Drehantrieb mit einer Drehzahlumschalteinrichtung für eine Werkzeughaltevorrichtung, wie sie beispielsweise in der WO 99/127000 beschrieben ist. Moderne Bearbeitungszentren sind häufig zur Drehbearbeitung und Fräsbearbeitung konzipiert. Die Werkzeughalteeinrichtung ist somit zur Aufnahme von Fräswerkzeugen und Drehwerkzeugen ausgebildet, wozu häufig eine gemeinsame Werkzeugwechselvorrichtung vorgesehen ist. Beim Fräsen treten am Werkzeug große Drehmomente bei relativ kleinen Drehzahlen auf, während beim Drehen bei kleinen Drehmomenten große Drehzahlen vorherrschen. Aus diesem Grund benötigt der Drehantrieb für die Werkzeughaltevorrichtung eine Drehzahlumschalteinrichtung, die auch den unterschiedlichen Momentenanforderungen gerecht wird.

Eine Aufgabe der vorliegenden Erfindung besteht darin, den bekannten Drehantrieb mit Drehzahlumschalteinrichtung im Hinblick auf diese Forderungen zu verbessern und gleichzeitig zu vereinfachen.

Diese Aufgabe wird erfindungsgemäß durch einen Drehantrieb mit einer Drehzahlumschalteinrichtung für eine Werkzeughaltevorrichtung gelöst, die eine die Werkzeughaltevorrichtung tragende Abtriebswelle besitzt, welche mittels eines Stellantriebs in zwei verschiedene Axialpositionen bewegbar ist, wobei die Abtriebswelle in der ersten Axialposition mit einem motorisch angetriebenen ersten Antriebszahnrad und in der zweiten Axialposition mit einer konzentrischen Hohlwelle gekoppelt ist, die durch ein motorisch angetriebenes zweites Antriebszahnrad über ein Schneckengetriebe angetrieben ist.

Der erfindungsgemäße Drehantrieb kommt im Gegensatz zum bekannten Drehantrieb völlig ohne Klemmpinolen, Bremsbacken und Bremsscheiben aus, die vor allem bei entsprechenden Drehmomenten einem unerwünschten Verschleiß ausgesetzt sind. Die Drehzahlumschaltung erfolgt in einfacher Weise mittels eines einzigen einfachen Stellantriebs durch Axialbewegung der Abtriebswelle zwischen zwei Kopplungspositionen. Der motorische Antrieb kann bei diesem Drehantrieb vereinfacht realisiert werden. Auch die Drehlagerung der verschiedenen Komponenten vereinfacht sich beim erfindungsgemäßen Drehantrieb.

Durch die in den Unteransprüchen aufgeführten Maßnahmen sind vorteilhafte Weiterbildungen und Verbesserungen des im Anspruch 1 angegebenen Drehantriebs möglich.

Die beiden Antriebszahnräder sind zweckmäßigerweise über einen Zahn- oder Zahnriemenantrieb durch einen elektrischen Antriebsmotor antreibbar, wodurch ein kostengünstiger, einfacher und montagefreundlicher motorischer Antrieb realisiert ist.

Zur Kopplung zwischen der Abtriebswelle und dem ersten Antriebszahnrad einerseits und der konzentrischen Hohlwelle andererseits sind in vorteilhafter Weise zwei Kopplungseinrichtungen nach Art von Hirth-Verzahnungen vorgesehen. Durch die Verwendung ausschließlich von Zahnkopplungen wird eine sichere und verschleißarme Kopplung realisiert, durch die hohe Drehmomente übertragen werden können.

In einer vorteilhaften Ausgestaltung dieser Kopplung besitzt die Abtriebswelle zwei Radialzahnkränze, von denen der erste in der ersten Axialposition der Abtriebswelle mit einem Radialzahnkranz des ersten Antriebszahnrads und der zweite in der zweiten Axialposition der Abtriebswelle mit einem Radialzahnkranz der konzentrischen Hohlwelle im Eingriff steht, wobei die Zähne der beiden Radialzahnkränze der Abtriebswelle vorzugsweise gegensinnig ausgerichtet sind. Durch geringfügiges Verschieben der Abtriebswelle kann somit zwischen der einen Kopplung und der anderen Kopplung umgeschaltet werden.

In einer vorteilhaften Ausgestaltung des Stellantriebs besitzt dieser eine zweite konzentrische Hohlwelle, die auf der Abtriebswelle drehbar gelagert und mit dieser axial gekoppelt ist, wobei ein Stellglied zur Axialverschiebung der zweiten konzentrischen Hohlwelle vorgesehen ist. Dieses Stellglied ist zweckmäßigerweise zwischen der zweiten und der axial unverschiebbaren ersten Hohlwelle angeordnet und insbesondere als fluidischer Stellzylinder ausgebildet, der vorzugsweise durch eine Ringnut und ein darin eingreifendes Ringelement in einfacher Weise gebildet ist. Die Abtriebswelle kann somit durch die zweite konzentrische Hohlwelle axial verschoben werden, ohne daß diese zweite axiale Hohlwelle mitrotieren muß.

Durch eine durch den Stellantrieb betätigbare Kopplungseinrichtung zur Entkopplung des zweiten Antriebszahnrads von der ersten konzentrischen Hohlwelle in der Axialposition der Abtriebswelle wird erreicht, daß sich dieses zweite Antriebsrad ständig mitdrehen kann, also in fester Antriebsverbindung mit dem Antriebsmotor steht, daß jedoch das Schneckengetriebe und damit die Rotationsbewegung der ersten konzentrischen Hohlwelle abgekoppelt werden kann, wenn diese Bewegungen nicht erforderlich sind. Hierdurch verringert sich der Verschleiß der entsprechenden Bauteile.

In einer vorteilhaften Ausgestaltung dieser Kopplungseinrichtung besitzt die zweite konzentrische Hohlwelle einen Mitnehmer zur entsprechenden Axialverschiebung eines Kopplungszahnrads mit Radialverzahnung, das auf einer Antriebswelle des Schneckengetriebes drehfest und axial verschiebbar angeordnet und mit einem Radialzahnkranz am zweiten Antriebszahnrad koppelbar ist. Auch hier kann somit auf jegliche Reibungskopplung verzichtet werden.

In einer zweckmäßigen Ausgestaltung besitzt das Schneckengetriebe ein ringförmiges, drehfest an der ersten konzentrischen Hohlwelle angeordnetes Schneckenrad sowie eine mit diesem in Wirkungsverbindung stehende Schnecke, die durch das zweite Antriebszahnrad antreibbar ist, insbesondere über ein Umlenkgetriebe.

In vorteilhafter Weise ist die erste konzentrische Hohlwelle als äußere Hohlwelle in einem Gehäuse des Drehantriebs drehbar gelagert, wobei vorzugsweise Axialkräfte aufnehmende Lagermittel vorgesehen sind, die bei der Bearbeitung auftreten.

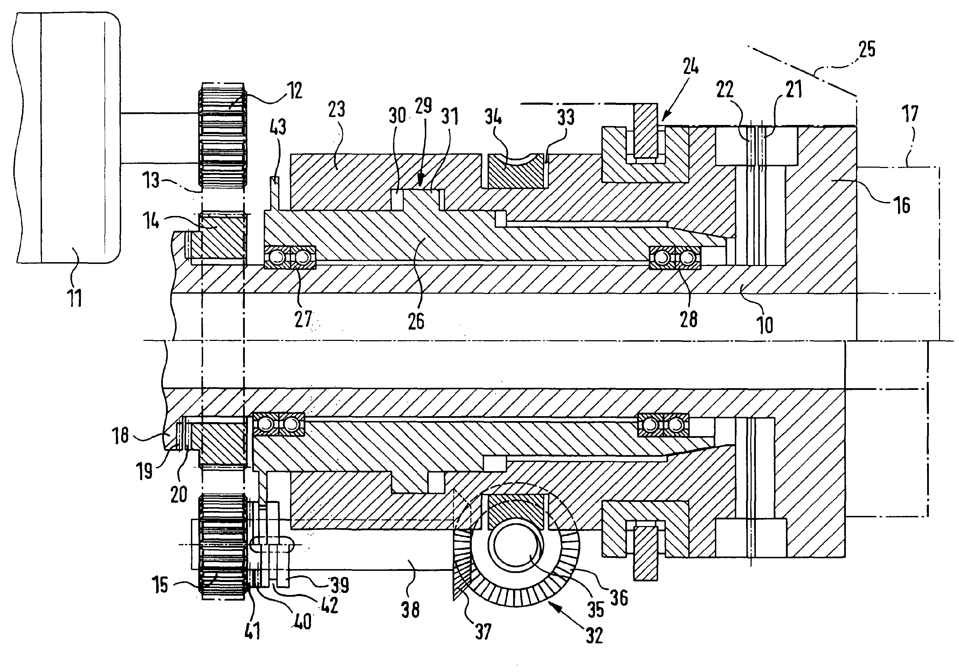

Ein Ausführungsbeispiel der Erfindung ist in der Zeichnung dargestellt und in der nachfolgenden Beschreibung näher erläutert. Die einzige Figur zeigt eine zum Teil schematische Querschnittsdarstellung eines Drehantriebs mit einer Drehzahlumschalteinrichtung für eine Werkzeughaltevorrichtung als Ausführungsbeispiel der Erfindung.

Bei dem in der einzigen Figur dargestellten Ausführungsbeispiel eines Drehantriebs ist in der oberen Hälfte der Darstellung eine Abtriebswelle 10 in einer ersten Schalt- bzw. Axialposition für die Drehbearbeitung dargestellt, in der große Drehzahlen und kleine Drehmomente erforderlich sind, und in der unteren Hälfte der Darstellung in einer zweiten Schalt- bzw. Axialposition für die Fräsbearbeitung, für die der Drehantrieb bei kleinen Drehzahlen und großen Drehmomenten arbeitet.

Ein nur zum Teil dargestellter elektrischer Antriebsmotor 11 treibt über ein Motorzahnrad 12 mit Hilfe eines Zahnriemens 13 ein erstes Antriebszahnrad 14 und ein zweites Antriebszahnrad 15 ständig an. Anstelle eines Zahnriemens 13 kann selbstverständlich auch ein anderer bekannter Antriebsstrang treten, oder aber das Motorzahnrad 12 treibt die Antriebszahnräder 14, 15 direkt durch Zahneingriff an.

Die als Hohlwelle ausgebildete Abtriebswelle 10 besitzt einen radial vergrößerten Stirnbereich 16, der eine nur schematisch gestrichelt dargestellte Werkzeughaltevorrichtung 17 trägt, in der alternativ Fräs- oder Drehwerkzeuge gehalten werden können. Die Drehwerkzeuge können beispielsweise auch in Form von Drehwerkzeugrevolvern eingesetzt sein. Üblicherweise erforderliche Hydraulikleitungen zum Spannen und/oder Lösen der Werkzeuge, die beispielsweise durch die Abtriebswelle 10 hindurchgeführt werden können, sind zur Vereinfachung nicht dargestellt.

Im Bereich des ersten Antriebszahnrads 14, das in Gestalt eines Ringzahnrads die Abtriebswelle 10 umgreift, besitzt die Abtriebswelle 10 ebenfalls einen stufenartig im Durchmesser vergrößerten Bereich 18, wobei an der radialen Fläche ein Hirth-Zahnkranz 19 mit radial ausgerichteten Zähnen angeordnet ist. Axial gegenüberliegend ist auch am ersten Antriebszahnrad 14 ein entsprechender Hirth-Zahnkranz 20 angeordnet. Selbstverständlich können auch andere Ausführungen von Zahnkränzen mit radialer Zahnung eingesetzt werden. Entsprechend sind am radial erweiterten Stirnbereich 16 der Abtriebswelle 10 ebenfalls ein Hirth-Zahnkranz 21 und axial gegenüberstehend ein Hirth-Zahnkranz 22 an einer ersten, die Abtriebswelle 10 umgreifenden Hohlwelle 23 angebracht. Die Zähne der beiden Zahnkränze 19, 21 an der Abtriebswelle 10 weisen dabei gegeneinander. Dabei ist die Anordnung konstruktiv so ausgelegt, daß die axial verschiebbare Abtriebswelle 10 entweder mit dem ersten Antriebszahnrad 14 (obere Hälfte der Darstellung) oder mit der ersten Hohlwelle 23 (untere Hälfte der Darstellung) im Zahneingriff steht.

Die erste Hohlwelle 23 ist mittels einer Lageranordnung 24 in einem schematisch strichpunktiert dargestellten Gehäuse 25 des Drehantriebs drehbar, jedoch axial unverschiebbar gelagert. Die Lageranordnung 24 ist zur Aufnahme von radialen wie auch axialen Kräften ausgelegt. Zur Vereinfachung wurde nur eine einzige Lageranordnung 24 dargestellt, jedoch können bei Bedarf selbstverständlich noch weitere Lagerstellen vorgesehen sein.

Zwischen der ersten Hohlwelle 23 und der Abtriebswelle 10 ist eine weitere, zweite Hohlwelle 26 angeordnet. Diese ist mittels zweier Lageranordnungen 27, 28 drehbar, jedoch axial unverschiebbar auf der Abtriebswelle 10 gelagert und relativ zur ersten Hohlwelle 23 axial verschiebbar. Zu dieser axialen Relativverschiebung dient ein fluidischer Stellzylinder 29, dessen Zylinderraum einerseits durch eine Ringnut 30 in der ersten Hohlwelle 23 und andererseits durch die diese Ringnut 30 verschließende zweite Hohlwelle 26 begrenzt ist. In die den Zylinderraum bildende Ringnut 30 greift ein als Kolben dienender Ringvorsprung 31 an der Außenseite der zweiten Hohlwelle 26 ein. Zur Relativverschiebung zwischen den beiden Hohlwellen 23, 26 wird der fluidische Stellzylinder 29 beispielsweise durch eine Hydraulikflüssigkeit beaufschlagt, wobei der Stellzylinder 29 als doppeltwirkender Stellzylinder oder als einfachwirkender Stellzylinder mit Federrückstellung ausgebildet sein kann. Dies ist zur Vereinfachung nicht dargestellt.

Ein Schneckengetriebe 32 besteht aus einem in einer Umfangsnut 33 der ersten Hohlwelle 23 fixierten ringförmigen Schneckenrad 34 mit Außenzahnung, das in Zahneingriff mit einer Schnecke 35 steht, deren Drehachse senkrecht zur Drehachse des Schneckenrads 34 verläuft, wobei die Schnecke 35 ortsfest im Gehäuse 25 gelagert ist. Ein mit der Schnecke 35 drehfest verbundenes erstes Kegelrad 36 steht im Zahneingriff mit einem zweiten Kegelrad 37, das auf einer gemeinsamen Welle 38 mit dem zweiten Antriebszahnrad 15 angeordnet ist. Zur Kopplung und Entkopplung der Welle 38 mit dem zweiten Antriebszahnrad 15 dient ein Kopplungsrad 39 auf dieser Welle 38, das an seiner zum zweiten Antriebszahnrad 15 hin gerichteten Seite mit einem Hirth-Zahnkranz 40 versehen ist. Ein entsprechender Hirth-Zahnkranz 41 ist gegenüberliegend an einer Seite des zweiten Antriebszahnrads 15 angeordnet. Das Kopplungszahnrad 39 ist drehfest, jedoch axial verschiebbar auf der Welle 38 angeordnet und besitzt eine umfangsseitige Ringnut 42, in die ein ringartiger Mitnehmer 43 an der zweiten Hohlwelle 26 eingreift, so daß das Kopplungszahnrad 39 bei der Verschiebung der zweiten Hohlwelle 26 axial mitverschoben wird, um eine Kopplung bzw. Entkopplung mit dem zweiten Antriebszahnrad 15 zu erzielen. Das zweite Antriebszahnrad 15 in der unteren Hälfte der Figur ist hälftig in der eingekoppelten und hälftig in der ausgekoppelten Position dargestellt.

Die beiden Antriebszahnräder 14, 15 werden ständig vom elektrischen Antriebsmotor 11 angetrieben. Für schnelle Rotationsbewegungen der Abtriebswelle 10 wird der fluidische Stellzylinder 29 so betätigt, daß die in der oberen Hälfte der Figur dargestellte Kopplungsposition vorliegt. Durch die Betätigung des fluidischen Stellzylinders 29 bewegt sich die zweite Hohlwelle 26 und mit ihr die Abtriebswelle 10 nach rechts, bis das erste Antriebszahnrad 14 mittels der Zahnkränze 19, 20 in Zahneingriff mit der Abtriebswelle 10 steht, während die Zahnkränze 21, 22 außer Eingriff stehen. Weiterhin sind die Zahnkränze 40, 41 entkoppelt, so daß die Welle 38 und damit das Schneckengetriebe 32 nicht vom zweiten Antriebszahnrad 15 angetrieben wird. Dies bedeutet, daß die Abtriebswelle 10 durch den direkten Antrieb schnell rotiert, während die beiden Hohlwellen 23, 26 nicht rotieren. Die erste Hohlwelle 23 wird durch die Schnecke 35 arretiert, während die zweite Hohlwelle 26 durch Reibung an der ersten Hohlwelle 23 gehalten wird.

Wird auf die langsamere Fräsbearbeitung umgeschaltet, so wird der Stellzylinder 29 in der entgegengesetzten Richtung betätigt bzw. durch Federbelastung in die entgegengesetzte Position gebracht, so daß die zweite Hohlwelle 26 die Abtriebswelle 10 so weit nach links verschiebt, bis die Zahnkränze 21, 22 in Eingriff und die Zahnkränze 19, 20 außer Eingriff gelangen. Dadurch ist die Abtriebswelle 10 vom ersten Antriebszahnrad 14 entkoppelt. Gleichzeitig gelangen die Zahnkränze 40, 41 in Eingriff, so daß das zweite Antriebszahnrad 15 die Welle 38 und dadurch das Schneckengetriebe 32 antreibt. Mit Hilfe dieses Schneckengetriebes 32 rotiert die erste Hohlwelle 23 in langsamer Rotationsbewegung und treibt infolge des Zahneingriffs der Zahnkränze 21, 22 die Abtriebswelle 10 entsprechend an.

Bei der vereinfachten und zum Teil schematischen Darstellung der einzigen Figur wurde auf die Darstellung von an sich erforderlichen Details zum Teil verzichtet. So sind selbstverständlich weitere nicht dargestellte Lager erforderlich, um die beschriebenen Rotationsbewegungen durchführen zu können.

## Patentansprüche

1. Drehantrieb mit einer Drehzahlumschalteinrichtung für eine Werkzeughaltevorrichtung (17), mit einer die Werkzeughaltevorrichtung (17) tragenden Abtriebswelle (10), die mittels eines Stellantriebs (29) in zwei verschiedene Axialpositionen bewegbar ist, wobei die Abtriebswelle (10) in der ersten Axialposition mit einem motorisch angetriebenen ersten Antriebszahnrad (14) und in der zweiten Axialposition mit einer konzentrischen Hohlwelle (23) gekoppelt ist, die durch ein motorisch angetriebenes zweites Antriebszahnrad (15) über ein Schneckengetriebe (32)angetrieben ist.

2. Drehantrieb nach Anspruch 1, **dadurch gekennzeichnet, daß** die beiden Antriebszahnräder (14, 15) über einen Zahn- oder Zahnriemenantrieb (12, 13) durch einen elektrischen Antriebsmotor (11) antreibbar sind.

3. Drehantrieb nach Anspruch 1 oder 2, **dadurch gekennzeichnet, daß** zur Kopplung zwischen der Abtriebswelle (10) und dem ersten Antriebszahnrad (43) einerseits und der konzentrischen Hohlwelle (23) andererseits zwei Kopplungseinrichtungen (19-22) nach Art von Hirth-Verzahnungen vorgesehen sind.

4. Drehantrieb nach Anspruch 3, **dadurch gekennzeichnet, daß** die Abtriebswelle (10) zwei Radialzahnkränze (19, 21) besitzt, von denen der erste (19) in der ersten Axialposition der Abtriebswelle mit einem Radialzahnkranz (20) des ersten Antriebszahnrads (43) und der zweite (21) in der zweiten Axialposition der Abtriebswelle (10) mit einem Radialzahnkranz (22) der konzentrischen Hohlwelle (23) im Eingriff steht, wobei die Zähne der beiden Radialzahnkränze (19, 21) der Abtriebswelle (10) vorzugsweise gegeneinander gerichtet sind.

5. Drehantrieb nach einem der vorhergehenden Ansprüche, **dadurch gekennzeichnet, daß** der Stellantrieb (29) eine zweite konzentrische Hohlwelle (26) aufweist, die auf der Abtriebswelle (10) drehbar gelagert und mit dieser axial gekoppelt ist, wobei ein Stellglied zur Axialverschiebung der zweiten konzentrischen Hohlwelle (26) vorgesehen ist.

6. Drehantrieb nach Anspruch 5, **dadurch gekennzeichnet, daß** das Stellglied zwischen der zweiten (26) und der axial nicht verschiebbaren ersten Hohlwelle (23) angeordnet ist, und insbesondere als fluidischer Stellzylinder ausgebildet ist, der vorzugsweise durch eine Ringnut (30) und ein darin eingreifendes Ringelement (31) gebildet ist.

7. Drehantrieb nach einem der vorhergehenden Ansprüche, **dadurch gekennzeichnet, daß** eine durch den Stellantrieb (29) betätigbare Kopplungseinrichtung zur Entkopplung des zweiten Antriebszahnrads (15) von der ersten konzentrischen Hohlwelle (23) in der ersten Axialposition der Abtriebswelle vorgesehen ist.

8. Drehantrieb nach Anspruch 5 und 7, **dadurch gekennzeichnet, daß** die zweite konzentrische Hohlwelle (26) einen Mitnehmer (43) zur entsprechenden Axialverschiebung eines Kopplungsrads (39) mit Radialverzahnung (40) besitzt, das auf einer Antriebswelle (38) für das Schneckengetriebe (32) drehfest und axial verschiebbar angeordnet und mit einem Radialzahnkranz (41) am zweiten Antriebsrad (15) koppelbar ist.

9. Drehantrieb nach einem der vorhergehenden Ansprüche, **dadurch gekennzeichnet, daß** das Schneckengetriebe (32) ein ringförmiges, drehfest an der ersten konzentrischen Hohlwelle (23) angeordnetes Schneckenrad (34) sowie eine mit diesem in Wirkverbindung stehende Schnecke (35) besitzt, die durch das zweite Antriebszahnrad (15) antreibbar ist, insbesondere über ein Umlenkgetriebe (36, 37).

10. Drehantrieb nach einem der vorhergehenden Ansprüche, **dadurch gekennzeichnet, daß** die erste konzentrische Hohlwelle (23) als äußere Hohlwelle in einem Gehäuse (25) des Drehantriebs drehbar gelagert ist, wobei vorzugsweise auch Axialkräfte aufnehmende Lagermittel (24) vorgesehen sind.
